# EUROPEAN PATENT APPLICATION

(11) **EP 1 909 287 A1**
(43) Date of publication of application: **09.04.2008**
(21) Application number: 07017310.9
(22) Date of filing: 04.09.2007
(51) Int. Cl.: G11B 33/04

(54) **Binder**

(30) Priority: 05.09.2006 US 842335 P; 10.11.2006 US 598217
(71) Applicant: Cubix Commercial Corp., dba Basic Creations, Stevenson Ranch CA 91381 (US)
(72) Inventor: Sabounjian, Ara Alan Sarkis, Stevenson Ranch, CA 91381 (US)
(74) Representative: Becker Kurig Straus

(57) **Abstract**

A system configured to hold a plurality of discs comprises a plurality of disc holders. The plurality of disc holders have a region with a snap-fit structure that is configured to receive a disc. The plurality of disc holders also have a plurality of hinges with protruding portions positioned along a disc holder binding edge. The plurality of disc holders comprise polystyrene. The system further comprises a flexible binder having a plurality of slots formed therein. The slots are positioned over the protruding portions on the disc holder binding edges. The flexible binder comprises at least polypropylene. The flexible binder is bonded to the plurality of disc holders using a heat treatment technique.

## Description

### CROSS-REFERENCE TO RELATED APPLICATIONS

This application claims the benefit of U.S. Provisional Patent Application 60/842,335 (filed 5 September 2006), the entire disclosure of which is hereby incorporated by reference herein.

### STATEMENT REGARDING FEDERALLY SPONSORED RESEARCH OR DEVELOPMENT

Not Applicable

### THE NAMES OF THE PARTIES TO A JOINT RESEARCH AGREEMENT

Not Applicable

### INCORPORATION-BY-REFERENCE OF MATERIAL SUBMITTED ON A COMPACT DISC

Not Applicable

### BACKGROUND OF THE INVENTION

The present invention relates generally to plastics manufacturing, and relates more specifically to a device capable of binding a plurality of plastic items together.

Plastic holders are often used in the packaging and storage of items such as compact discs (CDs), digital video discs (DVDs), memory cards, magnetic cards, radiofrequency identification cards and other items. For example, the jewel case is a common type of plastic holder that is used to package CDs and DVDs in a way that provides protection from dust, scratches and other types of damage. For applications where several items are to be packaged together, packaging systems have been developed to bind multiple plastic holders together. Such packaging systems are useful because they allow consumers to easily turn from one plastic holder to another while viewing the packaged items, much like the pages of a book are turned and viewed. To provide a specific example, a set of DVDs will often be packaged together, wherein each DVD in the set contains episodes from a different season of a television show. Providing the DVDs in plastic holders that are bound together like pages of a book allows a consumer to quickly turn the plastic holders and view the available DVDs.

### BRIEF SUMMARY OF THE INVENTION

While conventional packaging systems allow multiple plastic holders to be bound together, such systems tend to include complex and/or fragile structures that do not provide adequate durability. For example, in a configuration wherein multiple plastic holders are coupled together using a snap-fit hinge, it is common for the plastic holders to break away or otherwise become separated from the snap-fit hinge. Likewise, plastic holders that are glued, taped, or are otherwise adhered to a binding element also suffer from limited durability, particularly since adhesives (a) tend not to bond well to many of the commonly-used plastics, and (b) tend to lose their adhesiveness over time and with repeated use. The durability of packaging systems is important, since one purpose of such systems is to provide continued protection for the packaged items even if the holder is handled roughly, and even after prolonged and repeated use. Based on the foregoing, Applicant has developed an improved durable binding system that is capable of holding multiple plastic holders together.

In one embodiment, a system configured to hold a plurality of discs comprises a plurality of disc holders. The plurality of disc holders have a region with a snap-fit structure that is configured to receive a disc. The plurality of disc holders also have a plurality of hinges with protruding portions positioned along a disc holder binding edge. The plurality of disc holders comprise polystyrene. The system further comprises a flexible binder having a plurality of slots formed therein. The slots are positioned over the protruding portions on the disc holder binding edges. The flexible binder comprises at least polypropylene. The flexible binder is bonded to the plurality of disc holders using a heat treatment technique.

In another embodiment, an apparatus comprises a plurality of trays. The plurality of trays have a region that is shaped to removably hold a packaged item therein. The plurality of trays also have a side. The plurality of trays are stacked such that the sides of the plurality of trays are positioned adjacent to each other. The plurality of trays also have a protruding portion positioned along and extending from the side. The apparatus further comprises a binder that is bonded to the sides of the plurality of trays. The binder has a plurality of openings formed therein. The plurality of openings receive the protruding portions from the plurality of trays.

In another embodiment, a method for manufacturing an apparatus capable of holding a plurality of media discs comprises positioning a first holding tray adjacent to a second holding tray. A binding edge of the first holding tray is positioned adjacent to a binding edge of the second holding tray. The first and second holding trays each include a plurality of protruding portions extending from the respective binding edges of the first and second holding trays. The first and second holding trays comprise a first material. The method further comprises placing a binder on the first and second holding trays. The binder includes a plurality of openings that are configured to receive the plurality of protruding portions extending from the binding edges of the first and second holding trays. The binder comprises a second material. The method further comprises performing a heat treatment technique, so as to secure the binder to the first and second holding trays.

In another embodiment, an apparatus comprises a disc holder having a region with a snap-fit structure that is configured to removably receive a disc therein. The disc holder comprises a first material. The apparatus further comprises a plurality of protruding portions positioned along a binding edge of the disc holder. The protruding portions include a riveted tab portion. The protruding portions comprise the first material. The apparatus further comprises a flexible binder having a plurality of openings formed therein. The flexible binder is comprised of a second material that is different than the first material. The flexible binder is positioned onto the disc holder such that the protruding portions are at least partially within the openings, and such that the riveted tab portions at least partially extend over an exterior surface of the flexible binder.

### BRIEF DESCRIPTION OF THE SEVERAL VIEWS OF THE DRAWINGS

Example embodiments of the binding systems disclosed herein are illustrated in the accompanying drawings, which are for illustrative purposes only. The drawings comprise the following figures, in which like numerals indicate like parts.
Figure 1 illustrates a front view of a holder configured to be bound using an example binding system disclosed herein.
Figure 2 illustrates the bound edges of four holders stacked in a front-to-back arrangement.
Figure 3 illustrates a cross-sectional view of the four holders of Figure 2, viewed along line 3-3.
Figure 4 illustrates a top surface view of an example binder that is configured to bind together the four holders of Figure 2.
Figure 5 illustrates a front view of the example holder of Figure 1 having the example binder of Figure 4 positioned into the recessed hinges.
Figure 6 illustrates the bound edges of four holders that are stacked in a front-to-back arrangement, and that are bound together using the binder of Figure 4.
Figure 7 illustrates a cross-sectional view of the four bound holders of Figure 6, viewed along line 7-7.
Figure 8A illustrates a front view of a modified holder configured to be bound using an exterior binder, viewed along line 8A-8A of Figure 8B.
Figure 8B illustrates the bound edges of four modified holders configured to be bound using an exterior binder, viewed along line 8B-8B of Figure 8A.
Figure 9 illustrates an example binding system using both the exterior binder of Figure 8A and the recessed binder of Figure 5.
Figure 10 illustrates a front view of a modified holder having recessed hinges with multiple riveted protruding portions.
Figure 11 illustrates an exploded cross-sectional view of the recessed hinge of Figure 10 that includes a riveted protruding portion, viewed along line 11-11.
Figure 12 illustrates an exploded view of a recessed hinge of Figure 10 that includes a riveted protruding portion.
Figure 13 illustrates a top surface view of an example binder that is configured to bind together a plurality of holders such as that illustrated in Figure 10.
Figure 14 illustrates a cross-sectional view of the binder of Figure 13, viewed along line 14-14.
Figure 15 illustrates a cross-sectional view of the binder of Figure 13, viewed along line 15-15.
Figure 16 illustrates a cross-sectional view of four bound holders
Figure 17 illustrates a perspective view of three holders configured to be bound together by two binders, each comprising three pairs of slots.
Figure 18 illustrates a perspective view of bound holders positioned within a multi-panel cover.

### DETAILED DESCRIPTION OF THE INVENTION

In accordance with the foregoing, packaging systems have been developed to bind multiple plastic holders together. Several example embodiments of such binding systems are disclosed herein. These systems are generally useful for applications where a plurality of holders are to be held together in a way that allows users to easily turn from one holder to another while viewing items held in the holders. While the binding systems disclosed herein are particularly useful for binding together plastic trays used to hold digital media such as CDs and DVDs, such systems are also useful for binding together (a) plastic trays configured to hold other items, such as rare coins, photographic slides or silverware, and (b) types of holding apparatuses other than plastic trays, such as holders comprising materials other than plastic, and plastic apparatuses other than trays.

In view of the foregoing, the terms "holder" and "holders" are used generically herein to refer to both (a) apparatuses conventionally described as "holders" or "trays" and (b) other apparatus that are capable of holding items, and that are typically kept together using a binder. Likewise, the terms "packaged item" and "packaged items" are used herein to refer generally to items held using a "holder", and are not limited to digital and/or optical media such as CDs and DVDs.

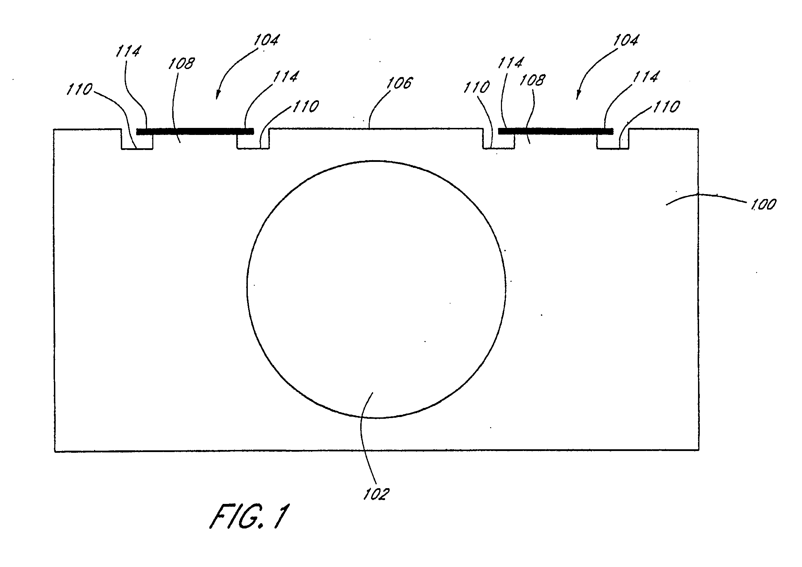

Figure 1 illustrates a holder 100 that is configured for use with an example binding system disclosed herein. The holder 100 is also referred to herein as a "single page", since it is possible to bind a plurality of the plastic holders 10 together like the pages of a book. In an example embodiment, the holder 100 comprises a polymeric material, such as polystyrene, high-impact polystyrene, polypropylene, another thermoplastic material, another hydrocarbon-based material, or some mixture of the foregoing materials. Other suitable materials are used in other embodiments. This holder 100 is optionally provided with a selected color, finish and/or appearance, such as clear, translucent or tinted. In certain embodiments, the holder 100 has images and/or designs printed and/or formed thereon. Different embodiments of the holder have different dimensions, such as different heights, lengths, and/or thicknesses; such dimensions are typically largely determined by the particular packaged item that is to be held in the holder.

The holder 100 includes a central region 102 configured to hold a packaged item, such as a CD or a DVD. The details of the means used to secure the packaged item in the central region 102 are not illustrated for the purposes of clarity, and because the binding systems disclosed herein are independent of such details. For example, the holder 100 optionally includes recessed areas and/or protrusions that are used to removably snap items, such as optical media, thereon.

Still referring to Figure 1, the holder 100 includes one or more hinges 104. In the illustrated embodiment, the hinges 104 are recessed with respect to the bound edge 106 of the holder 100, although in other embodiments the hinges 104 protrude from the bound edge 106 or are flush with the bound edge 106. While two, spaced-apart recessed hinges 104 are illustrated in Figure 1, fewer or more recessed hinges are provided in other embodiments. For example, in a modified embodiment, a hinge is located at the approximate midpoint of the bound edge 106. The depth of the recessed hinge 104 is preferably less than 5% of the total depth of the holder 100, is more preferably less than 1% of the total depth of the holder 100, and is most preferably less than 0.5% of the total depth of the holder 100. In alternative embodiments, the depth is greater than 5% of the total depth of the holder 100. By using recessed hinges 104, the dimensions of the holder 100 are not increased substantially beyond those dimensions required by the packaged item to be positioned in the holder 100. In the example embodiment illustrated in Figure 1, the recessed hinges 104 include a protruding portion 108 that is spaced apart from a recessed shelf 110. The protruding portions 108 optionally include tabs 114 that extend over the recessed shelf 110.

Figure 2 illustrates the bound edges 106 of four holders 100 stacked in a front-to-back arrangement. In the illustrated example embodiment, the protruding portion 108 is positioned at the approximate midpoint of the thickness *t* of the holder 100. Figure 2 also makes clear that the recessed shelf 110 illustrated in Figure 1 optionally has a reduced thickness as compared to the thickness t of the holder 100. Consequently, in such embodiments an open gap 112 is formed between the protruding portion 108 of one holder 100 and the recessed shelf 110 of the adjacent holder 100. Figure 3 is a cross-sectional view of the four holders 100 illustrated in Figure 2, viewed along line 3-3. Figure 3 also clearly illustrates the recessed shelf 110 from which the protruding portion 108 extends.

In an example embodiment, a plurality of holders, such as the four holders 100 illustrated in Figures 2 and 3, are bound together by positioning a binder into the recessed hinges 104, and over the protruding portions 108. Figure 4 illustrates an example embodiment of such a binder 116. The example binder 116 includes a plurality of openings, which are optionally in the form of slots 118 that are dimensioned to fit over the protruding portions 108 and into the recessed hinges 104 of the holder 100. In such embodiments, the number of slots 118 in the binder 116 corresponds to the number of holders 100 which are to be bound together. That is, while the example binder 116 illustrated in Figure 4 includes four slots 118, other binders include more or fewer slots in other embodiments. Regardless of the number of slots included in the binder, optionally the slots advantageously enhance the flexibility of the binder.

In certain embodiments, the binder 116 comprises a plastic material having an increased flexibility as compared to the material used to form the holders 100. For example, in one embodiment the binder 116 comprises a polystyrene-based material or a polypropylene-based material having increased flexibility as compared to the holder 100, although other materials are used in other embodiments and optionally in the present embodiment. Optionally, the binder 116 and the holder 100 have the same or similar melting points.

As indicated, in an example embodiment the binder 116 is configured to be mounted into the recessed hinges 104, such that the protruding portions 108 fit into the slots 118. For example, Figure 5 illustrates the example holder 100 of Figure 1 having the example binder 116 of Figure 4 positioned into each of the two recessed hinges 104. The binder 116 is optionally dimensioned to sit completely within the recessed hinge 104, such that an exterior surface 120 of the binder 116 is flush with the bound edge 106 of the holder 100, as illustrated in Figure 5. This configuration advantageously allows the dimensions of the holder 100 to be substantially unaffected by the presence of the binder 116. In other embodiments, the binder 116 is dimensioned to be recessed with respect to the bound edge 106, or is dimensioned to protrude from the bound edge 106. In certain embodiments, such as that illustrated in Figure 5, the binder 116 is dimensioned to seat onto the recessed shelf 110. In embodiments wherein the protruding portion 108 includes tabs 114, the binder 116 optionally has sufficient flexibility so as to seat around the tabs 114, with the tabs pressing into the binder 116, thereby further securing the binder 116 into the recessed hinge 104.

Figure 6 illustrates the bound edges 106 of four holders 100 that are stacked in a front-to-back arrangement, and that are bound together using the binder 116 illustrated in Figure 4. As illustrated, the protruding portion 108 extends through the slots 118 of the binder 116. Figure 7 is a cross-sectional view of the four holders 100 illustrated in Figure 6, viewed along line 7-7. In the example embodiment illustrated in Figure 7, the binder 116 includes slots having rounded edges 122, although in other embodiments the binder 116 includes slots having right-angled or other shaped corners. In the illustrated embodiment, the exterior surface 120 of the binder 116 is flush with the top surface of the protruding portions 108, although in other embodiments the exterior surface 120 of the binder 116 is recessed or protruding.

In an example embodiment, the binder 116 is snap-fit into the recessed hinges 104, for example by fitting the binder 116 around, and seating the binder 116 into, the tabs 114 on the protruding portion 108. Optionally, holders 100 that are bound together with a binder 116 are further exposed to a heat treatment process that is sufficient to slightly or significantly melt or soften the material comprising the protruding portions 108 of the holders. In such embodiments, the thermally affected protruding portions 108 deform to slightly or significantly spread over the exterior surface 120 of the binder 116, thereby making it more difficult for the binder 116 to be later removed from the recessed hinges 104 and/or the protruding portions 108. Optionally, a compressive force is applied to the protruding portions 108 during the heat treatment process, thereby further facilitating their physical deformation over the exterior surface 120 of the underlying binder 116. In this example process, the material comprising the holder 100 and the material comprising the binder 116 are not intermixed.

One example heat treatment process is an ultrasonic welding technique, wherein focused ultrasonic energy is used to generate a region of elevated temperature. Other heat treatment processes are used in addition or instead; example heat treatment processes include, but are not limited to, plastic welding, hot-plate welding, spin welding, and vibration welding, and laser welding. In an example embodiment, the heat treatment process is applied only to a localized portion of the holder 100, such as only to the protruding portions 108, thereby reducing the likelihood of causing thermal damage to other portions of the holder 100.

In an example heat treatment process, the protruding portions 108 are subjected to a compressive force and are exposed to a temperature that is preferably between about 190°C and about 250°C, that is more preferably between about 200°C and about 240°C, and that is most preferably between about 210°C and about 230°C. The period of temperature exposure is preferably between about 0.5 second and about 5 seconds, is more preferably between about 1 second and about 4 seconds and is most preferably between about 1.5 seconds and about 3 seconds. In an example embodiment, the protruding portions 108 are subjected to a compressive force and are exposed to an elevated temperature more than once, such as two times, three times, or four or more times. The protruding portions 108 are subjected to a compressive force that is preferably between about 25 N and about 55 N, that is more preferably between about 30 N and about 50 N, and that is most preferably between about 34 N and about 44 N. Other parameters (for example, thermal energy sources, temperatures, exposure times, compressive forces) are used in other embodiments.

Optionally, in addition or instead, the binder 116 is secured in the recessed hinges 104 using a plastic welding technique, which is one example type of heat treatment process. Plastic welding techniques are particularly useful for forming a strong bond between components comprised of similar or identical materials. Use of such a technique advantageously helps secure the binder 116 to the holder 100, thereby increasing the durability of the finished assembly, and decreasing the ease at which the binder 116 can be removed from the recessed hinge 104. Specifically, use of a plastic welding technique creates a chemical intermixing of the material comprising the holder 110 and the material comprising the binder 116. Example plastic welding techniques that are usable to bond the binder 116 to the holder 100 include, but are not limited to, ultrasonic welding, hot-plate welding, spin welding, and vibration welding, and laser welding. Regardless of the particular technique used, plastic welding can advantageously provide a bond between the binder 116 and the holder 110 that is significantly more durable than the bond provided by a simple snap-fit configuration or an adhesive joint.

In an example binding process, the plurality of holders 100 to be bound are held together in a clamp. A binder 116 is then placed in the corresponding recessed hinge 104 on the bound edge 106 of the holder 100. As disclosed herein, in certain embodiments one binder 116 is fitted into one recessed hinge 104, while in other embodiments multiple binders 116 are fitted into multiple recessed hinges 104. A heat treatment process is then used to cause the protruding portions 108 to slightly or significantly deform/change shape and overlay or spread over some or all of the exterior surface 120 of the binder 116. Optionally, in addition or instead, a plastic welding technique is used to heat, soften and/or melt the binder 116. Depending of the type of heat treatment process used, thermal energy is generated ultrasonically, using infrared light, using a laser, using a hot plate, using a solvent, using a combination of these techniques, or otherwise. The thermal energy causes the binder 116 to become welded onto and optionally insolubly connected to the holder 100. Optionally, the holder 100 is also heated, softened, and/or melted during the heat treatment process. Optionally, pressure is applied to the binder 116 during the heat treatment process to press the binder 116 into the recessed hinge 104. In an example embodiment, after the heat treatment process or processes are complete, the holder 100 is fixedly bound to the binder 116. Yet, owing to the flexibility of the binder 116, it is still possible to open and turn the bound holders 100 like the pages of a book, as similarly described herein. This configuration advantageously allows a user to quickly and easily turn the holders 100 and view packaged items held therein.

One example machine suitable for conducting the heat treatment processes described herein is GuoLin Model GL-8000KTC, available from Foshan Nanhai GuoLin Mechanics & Electrics High-Frequency Equipment Factory (Foshan City, Guangdon Province, China), although other machines are used in other embodiments. In an example heat treatment process using this particular machine, the components to be bonded together are pressed together and are exposed to a temperature that is preferably between about 190°C and about 250°C, that is more preferably between about 200°C and about 240°C, and that is most preferably between about 210°C and about 230°C. The period of temperature exposure is preferably between about 0.5 second and about 5 seconds, is more preferably between about 1 second and about 4 seconds and is most preferably between about 1.5 seconds and about 3 seconds. In an example embodiment, the components to be bound are pressed together and are exposed to an elevated temperature more than once, such as two times, three times, or four or more times. The components are pressed together using a force that is preferably between about 25 N and about 55 N, that is more preferably between about 30 N and about 50 N, and that is most preferably between about 34 N and about 44 N. Other parameters (for example, thermal energy sources, temperatures, exposure times, forces) are used in other embodiments.

Optionally, a cover (for example, comprising paper stock, plastic, and/or other material) is glued, taped, or otherwise fixed over all or a portion of the hinged side and/or over all or portions of the two end holders (for example, the top and bottom holders illustrated in Figure 2). The cover can have photographs, illustrations, and/or text printed thereon. Assembling the binders flush with the bound edge facilitates the affixing of a cover to the bound edge.

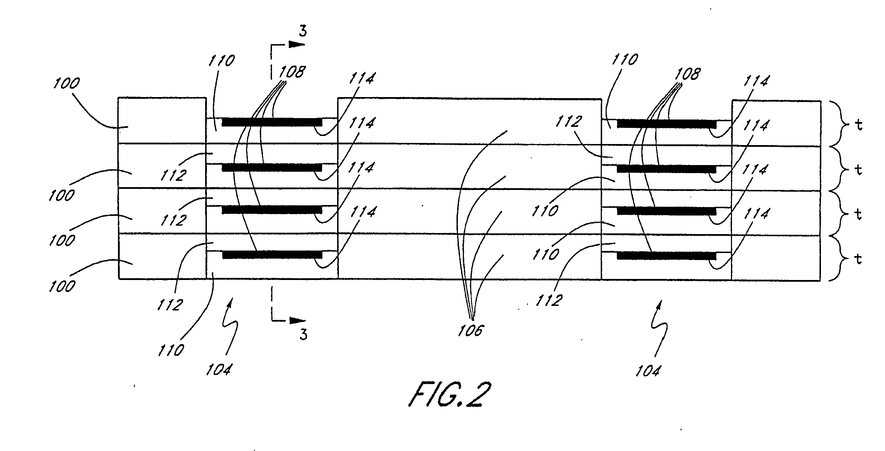

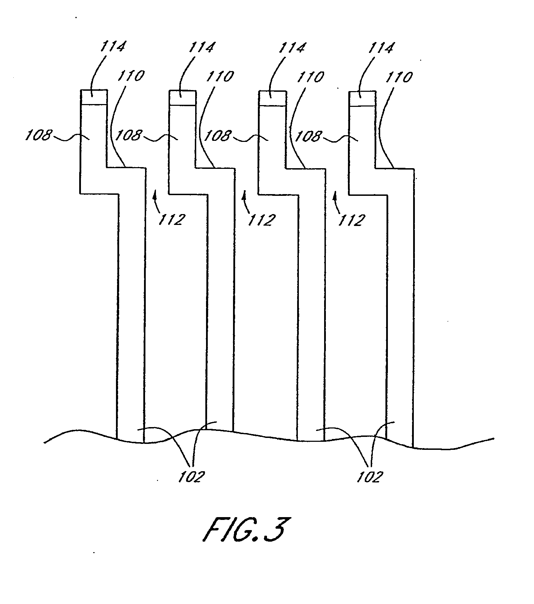

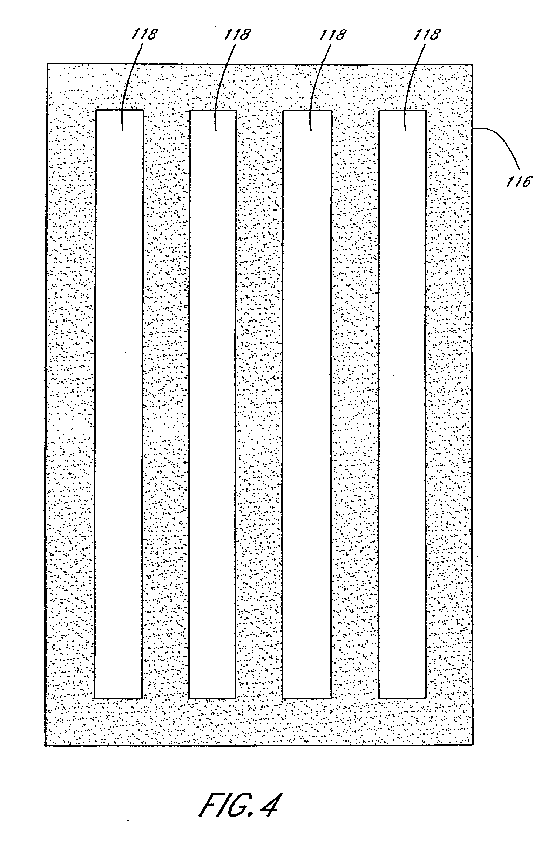

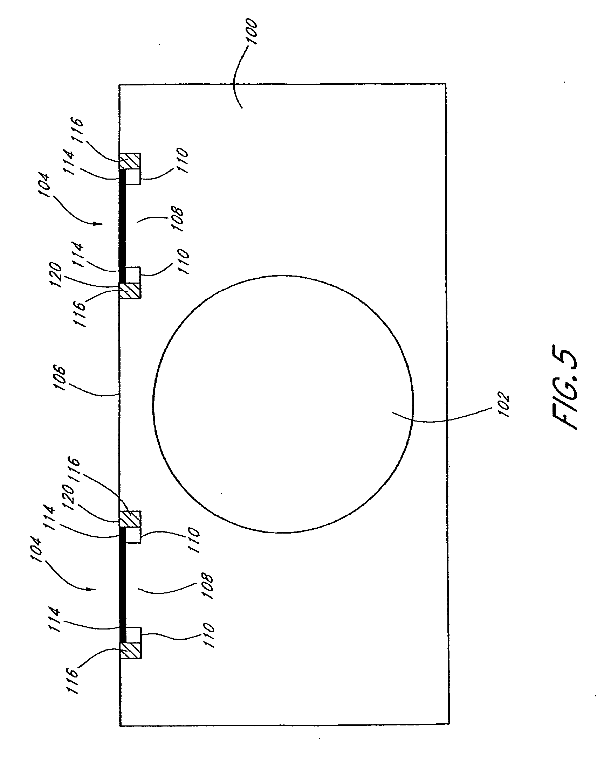

In modified embodiments, the holder does not include a recessed hinge, in which case the binder is affixed directly to the edge of the holder 100. An example embodiment using such a configuration is illustrated in Figures 8A and 8B. Specifically, Figure 8A illustrates a front view of a holder 200 having a central region 202 configured to hold a packaged item. The holder 200 is configured to be bound to a plurality of similar holders 200 that are stacked together in a front-to-back arrangement, as illustrated in Figure 8B. As illustrated, the holders 200 do not include a recessed hinge; instead, a binder 216 is positioned along the edge 206 to be bound, such that the binder 216 is disposed over the edge 206. In an example embodiment, the binder 216 has a width dimension that corresponds to the aggregate width of the number of holders that are to be bound together.

The modified embodiment illustrated in Figures 8A and 8B includes a single binder 216 positioned along a portion of the edge 206 of the holders 200 to be bound. In other modified embodiments, the binder 216 extends along the entire length of the edge 206 of the holders 200 to be bound. In still other modified embodiments, a plurality of binders 216 are positioned at various positions along the edge 206 of the holders 200 to be bound. Furthermore, while the holders 200 illustrated in Figures 8A and 8B do not include any protruding portions configured to fit into slots in the binder 216, such a configuration is used in still other modified embodiments. Specifically, the slotted binder 116 illustrated in Figure 4 is compatible with both the holder 100 having recessed hinges 104 illustrated in Figure 1, as well as the holder 200 having no recessed hinges illustrated in Figure 8A. Even without recessed hinges, the point of contact between the binder 216 and the edge 206 provides sufficient surface area to produce a strong yet flexible bond using one or more of the heat treatment techniques disclosed herein.

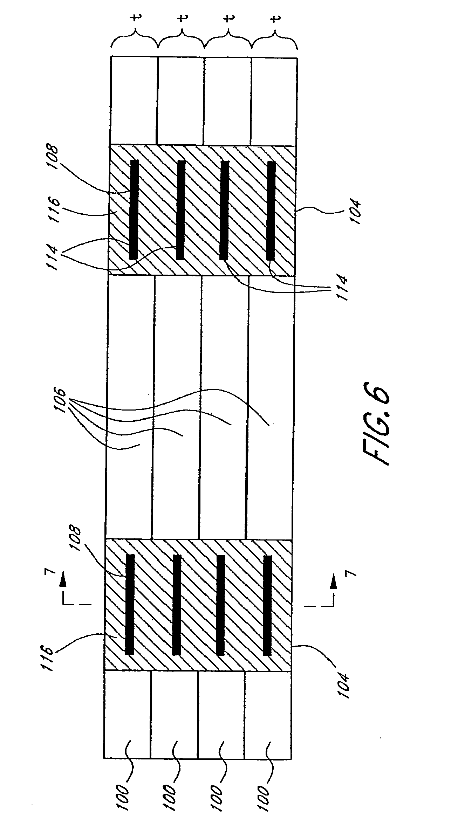

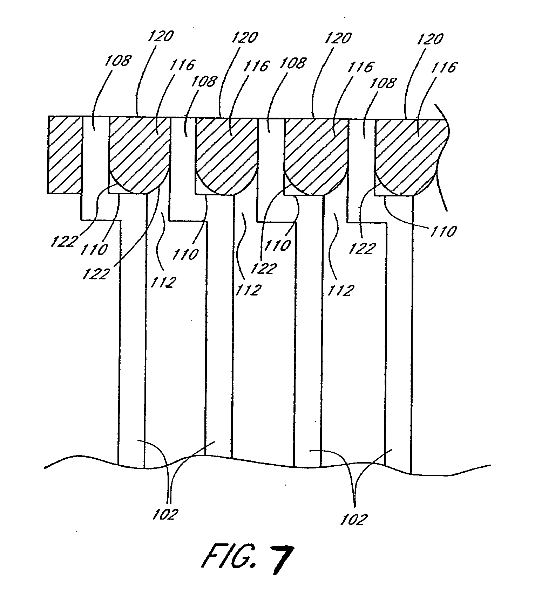

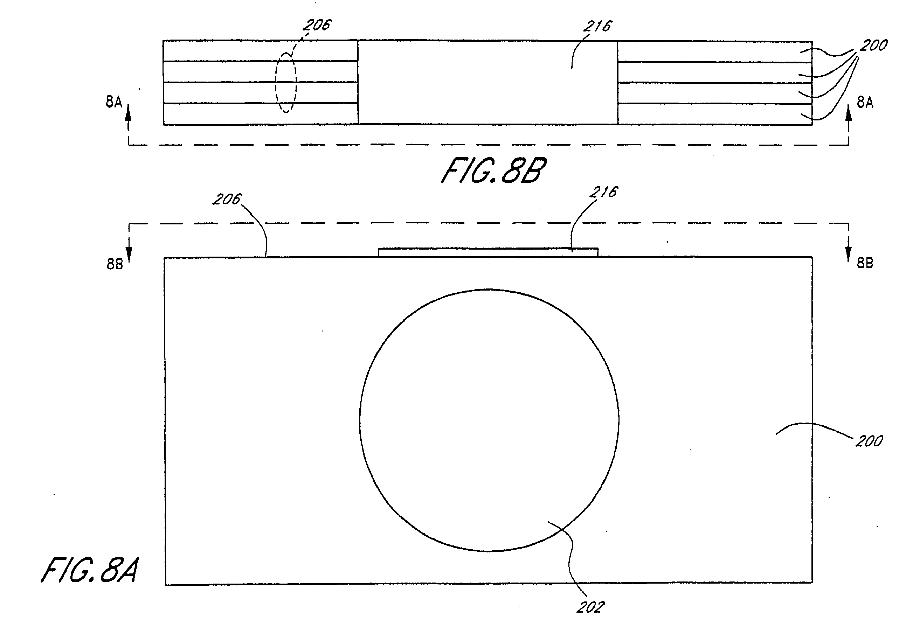

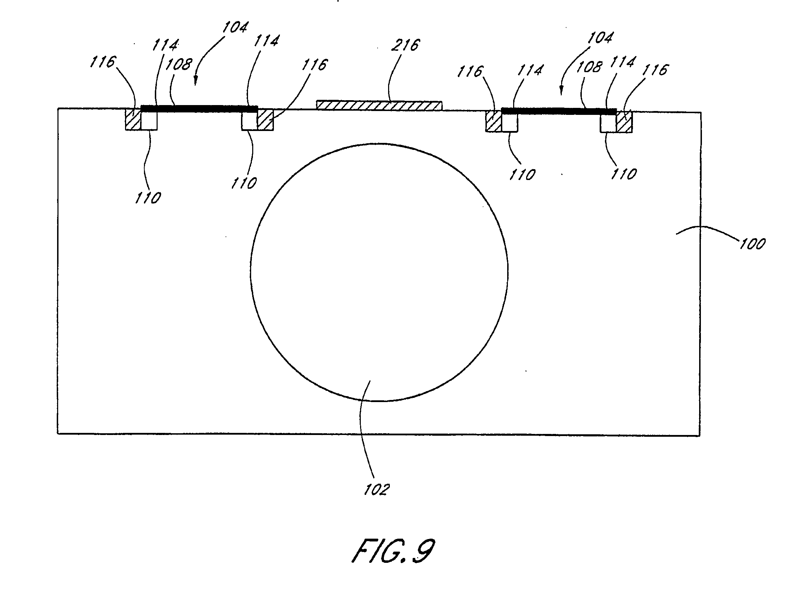

The binding system illustrated in Figures 8A and 8B is optionally used in combination with a binding system using recessed hinges. For example, Figure 9 illustrates selected components of an example binding system using both an exterior binder 206 positioned on the surface of the holder edge 106 and the recessed binder 116 positioned in a recessed hinge 104. While Figure 9 illustrates a binding system having an exterior binder 206 positioned between two recessed binders 116, in other embodiments other quantities and relative positions of exterior binders 206 and recessed binders 116 are used.

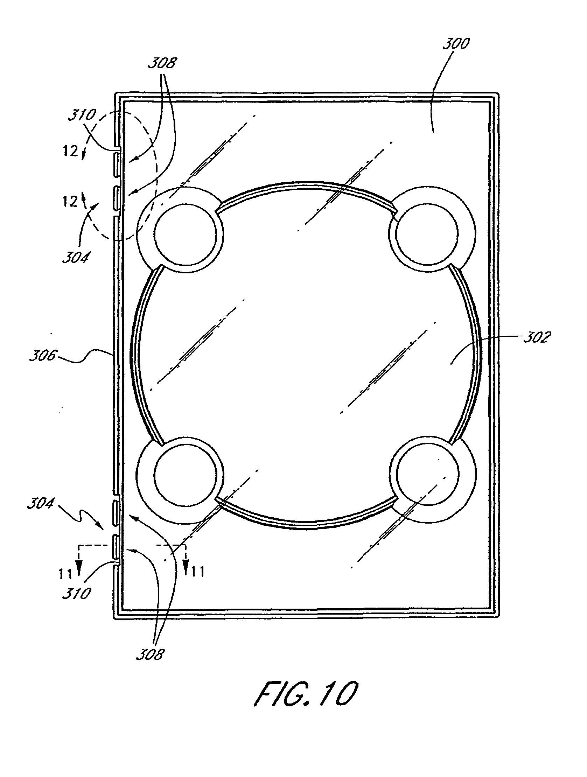

The holders 100 illustrated in Figures 1 through 3 include recessed hinges 104, each having a single protruding portion 108 that optionally include tabs 114. As indicated in Figures 1 and 3, the tabs 114 extend from the protruding portions 108 in substantially one dimension (that is, parallel to the elongate axis of the protruding portions 108). In another modified embodiment, the hinges include multiple protruding portions, and/or the tabs extend from the protruding portions in multiple dimensions. Figure 10 illustrates an example holder 300 including certain of these features.

Specifically, Figure 10 illustrates a holder 300 having a central region 302 configured to hold a packaged item. The holder 300 includes one or more hinges 304. In the example embodiment illustrated in Figure 10, the hinges 304 are recessed. However, in other embodiments the hinges 304 are formed on the edge 306 of the holder 300, such that the structural features of the hinges 304 described herein protrude from the edge 306 of the holder 300. That is, while a recessed hinge is illustrated and is described with respect to certain of the embodiments disclosed herein, and while a recessed hinge proffers certain advantages in certain applications, recession of the hinge is not required to procure the advantages disclosed herein. Nor is recession of the hinge required to implement the other features of the binding systems disclosed herein.

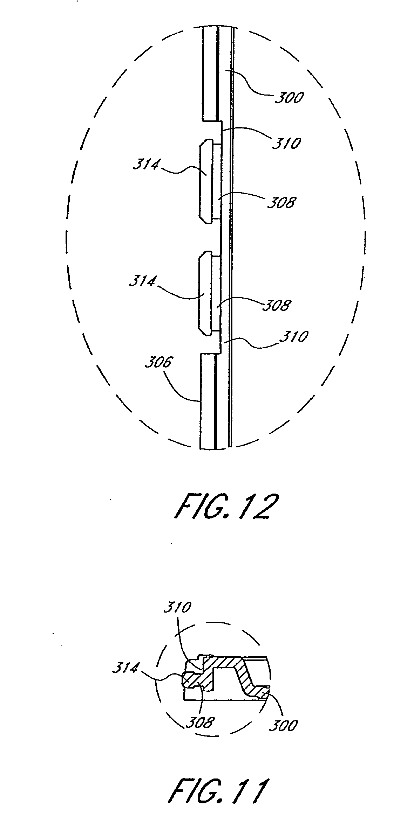

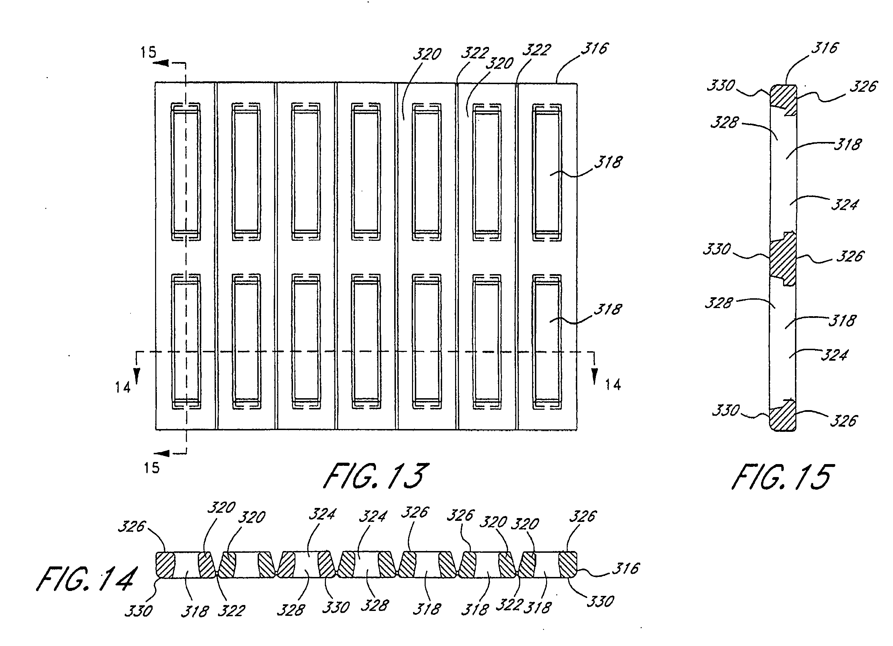

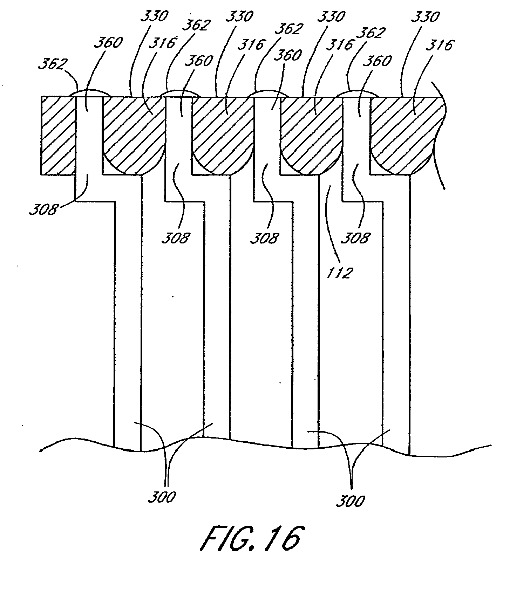

Still referring to the example embodiment illustrated in Figure 10, each of the hinges 304 includes two protruding portions 308. In other embodiments, the hinges 304 include more than two protruding portions 308. An exploded cross-sectional view of a riveted protruding portion 308, taken along line 11-11, is provided in Figure 11, and an exploded view of a riveted protruding portion 308 is provided in Figure 12. As illustrated in Figures 11 and 12, the riveted protruding portions 308 include a rivet head including tab 314 that extends in three dimensions used to secure a binder. Other embodiments can include heads that extend in fewer or greater directions. Thus, the hinges 304 include a relatively wider riveted tab 314 positioned over and supported by a relatively narrower protruding portion 308. As also illustrated in Figures 10 through 12, the hinges 304 optionally further include a recessed shelf 310 from which the protruding portion 308 extends.

Figure 13 illustrates an example embodiment of a seven-unit binder 316 configured for use with the holder 300 illustrated in Figure 10. The binder 316 includes a plurality of paired slots 318, wherein the number of pairs of slots 318 corresponds to the number of holders 300 which are to be bound together. The number, dimension and position of the paired slots 318 are configured such that the paired slots 318 are capable of being fitted over the protruding portions 308 and the riveted tabs 314 of the hinges 304. In an example embodiment, the binder 316 comprises a polystyrene-based material or a polypropylene-based material having increased flexibility as compared to the holder 300, although other materials are used in other embodiments. As described herein, providing the binder 316 with relatively high flexibility advantageously facilitates the relative rotational movement of a plurality of holders 300 that are held together by the binder 316.

The structure of the binder 316 also advantageously imparts additional flexibility to the binder 316. For example, the presence of the slots 318 increases the flexibility of the binder 316. Furthermore, by varying the relative thickness of the binder 316 and the slots 318, it is possible to further increase the flexibility of the binder 316. For example, Figure 14 illustrates a cross-sectional view of the example binder 316 illustrated in Figure 13, as viewed along line 14-14. Figure 14 illustrates the slots 318 into which the protruding portions 308 and the riveted tabs 314 are fitted.

In an example embodiment, the slots 318 have a varying width, with a narrower portion 324 located adjacent to an interior surface 326 of the binder 316, the interior surface 326 being configured to be positioned adjacent to the recessed shelf 310 of the holder 300. A wider portion 328 of the slots 318 is located adjacent to an exterior surface 330 of the binder 316, the exterior surface 330 located opposite the interior surface 326. This shape facilitates mating of the relatively narrow protruding portion 308 into the narrower portion 324 of the slot 318, and the relatively wide riveted tab 314 into the wider portion 328 of the slot 318. However, in other embodiments the slots 318 have a substantially constant width, such that the walls of the slots 318 and substantially linear, and form substantially right angles with the interior surface 326 and the exterior surface 330 of the binder 316.

Figure 14 also illustrates that the binder 316 includes a body portion 320 surrounding the slots 318, as well as a hinge portion 322 positioned approximately midway between adjacent slots 318. Optionally, the hinge portion 322 and the body portion 320 comprise the same material, and are formed as a unitary component using an injection molding process. Other manufacturing techniques are used in other embodiments. In the example embodiment illustrated in Figure 14, the presence of the smaller hinge portion 322 advantageously imparts additional flexibility to the binder 316, thereby further facilitating rotational movement of holders 300 that are held together by the binder 316. However, it should be noted that inclusion of the hinge portion 322 is not required, and that in certain embodiments the binder 316 has sufficient flexibility to provide the holders 300 with sufficient rotational movement even if no hinge portion 322 is included between adjacent slots 318.

Figure 15 illustrates a cross-sectional view of the example binder 316 illustrated in Figure 13, as viewed along line 15-15. Figure 14 illustrates an example configuration of the slots 318 in a dimension perpendicular to the cross-sectional view provided in Figure 13. In this example configuration, the slots 318 have a varying width, with a narrower portion 324 located adjacent to an interior surface 326 of the binder 316, and a wider portion 328 located adjacent to an exterior surface 330 of the binder 316. As set forth herein, this shape facilitates mating of the relatively narrow protruding portion 308 into the narrower portion 324 of the slot 318, and the relatively wide riveted tab 314 into the wider portion 328 of the slot 318. However, in other embodiments the slots 318 have a substantially constant width, such that the walls of the slots 318 are substantially linear, and form substantially right angles with the interior surface 326 and the exterior surface 330 of the binder 316.

Regardless of the particular configuration of the binder 316 and the riveted tabs 314 that extend from the protruding portions 308 of the hinges 304, in one embodiment the binder 316 is dimensioned to sit completely within the recessed hinge 304. In this configuration, the exterior surface 330 of the binder 316 is flush with the bound edge 306 of the holder 300. This configuration advantageously allows the dimensions of the holder 300 to be substantially unaffected by the presence of the binder 316. In other embodiments, the binder 116 is dimensioned to be recessed with respect to the bound edge 306, or is dimensioned to protrude from the bound edge 306. Likewise, the riveted tabs 314 are configured to extend out of the slots 318 in certain embodiments, while in other embodiments the riveted tabs 314 are configured to be flush with the binder exterior surface 330. The particular relative dimensions and shapes of the binder and the hinges are selected to provide a secure connection between the binder and the plurality of holders; this connection is optionally further secured by using a plastic welding technique.

In certain embodiments, the riveted tabs 314 extend out of the slots 318 formed in the binder 316. This configuration advantageously facilitates the deformation of the material comprising the riveted tabs 314 during a heat treatment process, such as one of the heat treatment processes disclosed herein. Specifically, the presence of the protruding riveted tab 314 provides additional plastic material to flow over and mechanically secure the binder 316, thus providing a particularly strong and durable bond between the holders 300 and the binder 316.

For example, Figure 16 illustrates a cross-sectional view of four holders 300 having protruding portions 308, wherein a binder 316 has been positioned around the protruding portions 308. The protruding portions 308 have been exposed to a heat treatment process, thus causing the tip portion 360 of the protruding portions 308 to deform and flatten over a binder exterior surface 330. As illustrated in Figure 16, the resulting structure includes a deformed portion 362 that extends over a portion of the binder exterior surface 330, thereby further securing the binder 316 to the holder 300. As described herein, inclusion of a riveted tab 314 on the protruding portion 308, such as illustrated in Figures 10 through 12, advantageously provides additional plastic material to flow over the binder exterior surface 330, and to form the deformed portion 362 illustrated in Figure 16.

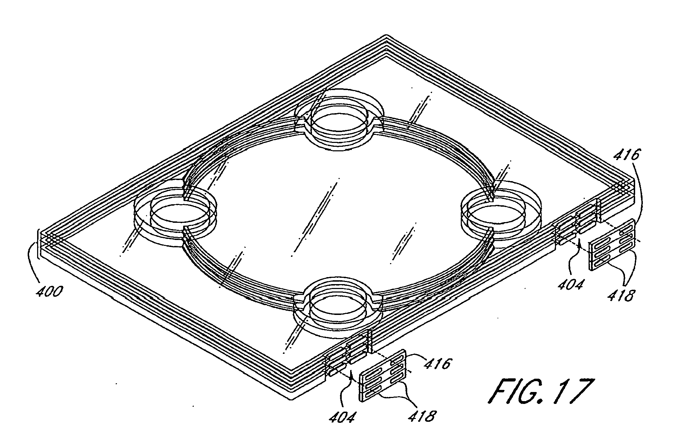

As set forth herein, the number of slots, or paired slots, provided in the binder depends on the number of holders which the binder is configured to bind together. For example, Figure 17 illustrates three holders 400 configured to be held together by two binders 416, wherein each binder 416 includes three paired slots 418. The binders 416 are configured to be mounted onto the hinges 404. As described herein, one or more heat treatment processes are optionally used to further secure the binder 416 onto the hinges 404. In an example embodiment, the binder provides sufficient strength to bind the holders 400 together, while still having sufficient flexibility to allow the holders 400 to be rotated with respect to each other, much like the pages of a book are turned. For example, in one embodiment a holder bound using the biding systems disclosed herein is capable of being rotated by an angle with respect to an adjacent bound holder that is preferably at least about 90°, more preferably at least about 120°, and most preferably at least about 150°.

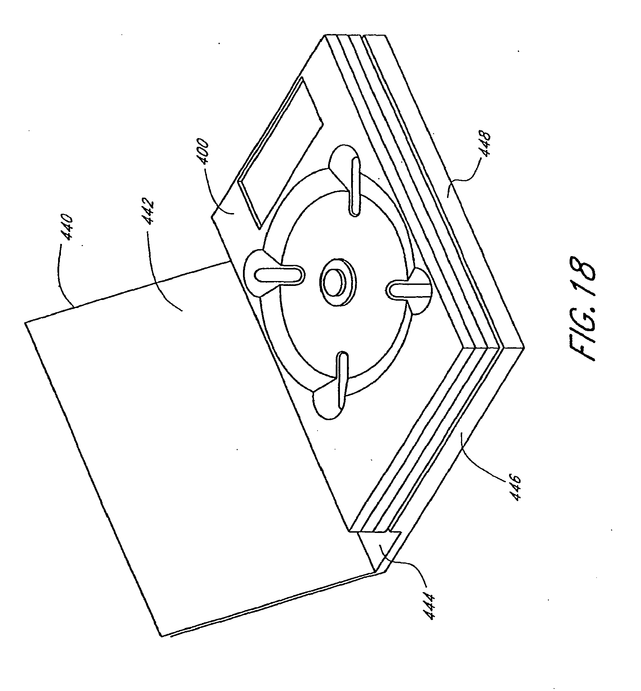

A cover is optionally affixed to one or more of the holders. For example, Figure 18 illustrates a multi-panel cover 440 that is coupled to one of a plurality of bound holders 400. The cover 440 has multiple panels, including a front panel 442, a bound edge panel 444, a bottom panel 446, and a side panel 448. In the illustrated example embodiment, at least one of the holders 400 has a plurality of panels coupled thereto, including panels coupled to different sides of the selected holder. In modified embodiments, the cover 440 includes fewer or more panels, such as one panel, two panels, three panels or four or more panels. As illustrated, at least one of the panels, such as side panel 448 for example, is coupled to at least one of a plurality of bound holders 400. Optionally, at least one of the panels, such as front panel 442 for example, is not directly affixed to a bound holder 400. In a modified embodiment, at least one of the panels is coupled to a plurality of the bound holders 400. In an example embodiment, the cover 440 is coupled to one or more of the holders 400 using an adhesive, although other coupling techniques are used in other embodiments, such as with tape or with a clip-on arrangement. Optionally, one or more of the panels have images and/or text printed thereon.

While the foregoing detailed description discloses several embodiments of the present invention, it should be understood that this disclosure is illustrative only and is not limiting of the present invention. It should be appreciated that the specific configurations and operations disclosed can differ from those described above, and that the methods described herein can be used in contexts other than binding multiple trays together in a way that allows the trays to be turned like the pages of a book.

## Claims

1. A system configured to hold a plurality of discs, the system comprising:
a plurality of disc holders having a region with a snap-fit structure that is configured to receive a disc, the plurality of disc holders also having a plurality of hinges with protruding portions positioned along a disc holder binding edge, wherein the plurality of disc holders comprise polystyrene; and
a flexible binder having a plurality of slots formed therein, the slots being positioned over the protruding portions on the disc holder binding edges, wherein the flexible binder comprises at least polypropylene, and wherein the flexible binder is bonded to the plurality of disc holders using a heat treatment technique.

2. The system of Claim 1, wherein the heat treatment technique is an ultrasonic welding technique that causes a portion of the protruding portions to extend over an exterior surface of the flexible binder.

3. The system of Claim 1, wherein the polystyrene has a greater flexibility than the polypropylene.

4. The system of Claim 1, wherein each of the plurality of disc holders includes two hinges, the two hinges being positioned on opposite sides of the snap-fit structure.

5. The system of Claim 1, wherein the snap-fit structure is configured to receive at least one of a compact disc or a digital video disc.

6. The system of Claim 1, wherein each of the plurality of hinges includes a plurality of protruding portions.

7. The system of Claim 1, wherein the protruding portions extend from a recessed shelf formed along the disc holder binding edge, such that the protruding portions do not extend beyond the disc holder binding edge.

8. The system of Claim 1, wherein:
the protruding portions extend from a recessed shelf formed along the disc holder binding edge, such that the protruding portions do not extend beyond the disc holder binding edge; and
the flexible binder has a thickness less than or equal to a depth of the recessed shelf, such that the flexible binder does not extend beyond the disc holder binding edge when the flexible binder is bonded to the plurality of disc holders.

9. The system of Claim 1, wherein the flexible binder includes a hinge portion located between adjacent slots, wherein the hinge portion has an increased flexibility as compared to other portions of the flexible binder.

10. The system of Claim 1, further comprising a cover affixed to at least the binding edges of the plurality of holders.

11. The system of Claim 1, further comprising a multi-panel cover that includes a first panel that is not directly affixed to any of the plurality of holders, and that includes a second panel that is coupled to at least one of the plurality of holders.

12. The system of Claim 1, further comprising a multi-panel cover, wherein a selected one of the plurality of holders has a plurality of panels coupled thereto.

13. The system of Claim 1, further comprising a cover affixed to at least one of the plurality of holders.

14. An apparatus comprising:
a plurality of trays, the plurality of trays having:
a region that is shaped to removably hold a packaged item therein,
a side, wherein the plurality of trays are stacked such that the sides of the plurality of trays are positioned adjacent to each other, and
a protruding portion positioned along and extending from the side; and
a binder that is coupled to the sides of the plurality of trays, the binder having a plurality of openings formed therein, wherein the plurality of openings receive the protruding portions from the plurality of trays.

15. The apparatus of Claim 14, wherein the side is a binding edge.

16. The apparatus of Claim 14, wherein the binder is bonded to the sides of the plurality of trays by intermixing a material comprising the plurality of trays and a material comprising the binder.

17. The apparatus of Claim 14, wherein the binder is bonded to the sides of the plurality of trays by deforming the protruding portion such that the protruding portion at least partially extends over an exterior surface of the binder.

18. The apparatus of Claim 14, wherein the binder has sufficient flexibility so as to allow a selected one of the plurality of trays to be rotated by at least about 90° with respect to an adjacent tray.

19. The apparatus of Claim 14, further comprising a tab that extends in multiple dimensions from the protruding portion.

20. The apparatus of Claim 14, further comprising a head that extends in at least one direction from the protruding portion.

21. The apparatus of Claim 14, further comprising a head that extends in multiple dimensions from the protruding portion, wherein the plurality of openings have a wider portion configured to receive the head, and a narrower portion configured to receive the protruding portion.

22. The apparatus of Claim 14, wherein the plurality of trays comprise a first material, and the binder comprises a second material that has a greater flexibility than the first material.

23. The apparatus of Claim 14, wherein the plurality of trays comprise at least polystyrene, and wherein the binder comprises at least polypropylene.

24. The apparatus of Claim 14, wherein:
the plurality of trays comprise a first material; and
the binder comprises a second material that has a greater flexibility than the first material.

25. The apparatus of Claim 14, wherein at least one of the plurality of openings is a slot.

26. The apparatus of Claim 14, further comprising a cover affixed to the sides of the plurality of trays.

27. The apparatus of Claim 14, further comprising a cover affixed to at least one of the plurality of trays.

28. The apparatus of Claim 14, wherein the apparatus includes at least two spaced apart binders.

29. The apparatus of Claim 14, wherein the apparatus includes at least three spaced apart binders.

30. A method for manufacturing an apparatus capable of holding a plurality of media discs, the method comprising:
positioning a first holding tray adjacent to a second holding tray, wherein a binding edge of the first holding tray is positioned adjacent to a binding edge of the second holding tray, wherein the first and second holding trays each include a plurality of protruding portions extending from the respective binding edges of the first and second holding trays, and wherein the first and second holding trays comprise a first material;
placing a binder on the first and second holding trays, wherein the binder includes a plurality of openings that are configured to receive the plurality of protruding portions extending from the binding edges of the first and second holding trays, and wherein the binder comprises a second material; and
performing a heat treatment technique, so as to secure the binder to the first and second holding trays.

31. The method of Claim 30, wherein:
the first material and the second material are the same; and
the heat treatment technique causes intermixing of the first and second materials.

32. The method of Claim 30, wherein:
the first material is polystyrene;
the second material is polyethylene; and
the heat treatment technique at least partially deforms the plurality of protruding portions, such that the plurality of protruding portions at least partially extend over an exterior surface of the binder.

33. The method of Claim 30, wherein the heat treatment technique is an ultrasonic welding technique.

34. The method of Claim 30, wherein the heat treatment technique further comprises heating the first material and the second material to a temperature between about 200°C and about 240°C while pressing the first material and the second material together.

35. The method of Claim 30, wherein each of the plurality of protruding portions includes a riveted tab that extends in multiple dimensions from the protruding portion.

36. The method of Claim 30, wherein the second material has a flexibility that is greater than a flexibility of the first material.

37. The method of Claim 30, wherein the binder includes a hinge portion positioned between adjacent openings of the plurality of openings, wherein the hinge portion has an increased flexibility as compared to other portions of the binder.

38. The method of Claim 30, wherein at least one opening is a slot.

39. The method of Claim 30, the method further comprising affixing a cover to at least one binding edge.

40. The method of Claim 30, the method further comprising affixing a cover to at least one of the first and second holding trays.

41. An apparatus comprising:
a disc holder having a region with a structure that is configured to removably receive a disc therein, the disc holder comprising a first material;
a plurality of protruding portions positioned along a binding edge of the disc holder, wherein the protruding portions include a riveted tab portion, and wherein the protruding portions comprise the first material; and
a flexible binder having a plurality of openings formed therein and being comprised of a second material that is different than the first material, the flexible binder being positioned onto the disc holder such that the protruding portions are at least partially within the openings, and such that the riveted tab portions at least partially extend over an exterior surface of the flexible binder.

42. The apparatus of Claim 41, wherein the first material is polystyrene and the second material is polypropylene.

43. The apparatus of Claim 41, further comprising a cover that is affixed to the disc holder.

44. The apparatus of Claim 41, further comprising a cover that is affixed to at least two side of the disc holder.

45. The apparatus of Claim 41, wherein the first material has a lower melting temperature than the second material.

46. The apparatus of Claim 41, further comprising a plurality of disc holders having protruding portions that are coupled to the flexible binder.

47. The apparatus of Claim 41, wherein the snap-fit structure is configured to receive at least one of a compact disc and a digital video disc.

48. The apparatus of Claim 41, wherein the protruding portions extend from a recessed shelf formed along the disc holder binding edge.
